(19) Europäisches Patentamt / European Patent Office / Office européen des brevets

(11) **EP 2 593 269 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **11736034.7**

(22) Anmeldetag: **12.07.2011**

(51) Int Cl.:
**B23K 1/00** (2006.01)          **B23K 35/28** (2006.01)
**B23K 1/20** (2006.01)          **B21D 53/02** (2006.01)
**F28D 1/03** (2006.01)          **F28F 21/08** (2006.01)
**B23K 101/14** (2006.01)          **B21C 37/15** (2006.01)

(86) Internationale Anmeldenummer:
**PCT/EP2011/061839**

(87) Internationale Veröffentlichungsnummer:
**WO 2012/007452 (19.01.2012 Gazette 2012/03)**

(54) **VERFAHREN ZUR HERSTELLUNG EINES FLUIDKANALS FÜR EINEN WÄRMETAUSCHER AUS ALUMINIUM**

PROCESS FOR MANUFACTURING A FLUID CHANNEL FOR A HEAT EXCHANGER MADE OF ALUMINIUM

PROCÉDÉ DE FABRICATION D'UN CONDUIT POUR FLUIDE POUR ÉCHANGEUR DE CHALEUR EN ALUMINIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2010 DE 102010031468**

(43) Veröffentlichungstag der Anmeldung:
**22.05.2013 Patentblatt 2013/21**

(73) Patentinhaber: **MAHLE Behr GmbH & Co. KG**
**70469 Stuttgart (DE)**

(72) Erfinder:
• **ENGLERT, Peter**
  **74177 Bad Friedrichshall (DE)**
• **GRÜNENWALD, Bernd**
  **72622 Nürtingen (DE)**
• **KURZ, Volker**
  **70499 Stuttgart (DE)**

(74) Vertreter: **Grauel, Andreas**
**Grauel IP**
**Patentanwaltskanzlei**
**Wartbergstrasse 14**
**70191 Stuttgart (DE)**

(56) Entgegenhaltungen:
**EP-A1- 0 632 245      EP-A1- 1 489 372**
**EP-A1- 1 637 267      EP-A2- 1 074 807**
**DE-T2- 69 703 638**

**Beschreibung**

Die vorliegende Erfindung betrifft ein Verfahren zur Herstellung eines Fluidkanals für einen Wärmetauscher nach dem Oberbegriff des Anspruchs 1.

Beim Bau von Wärmetauschern, insbesondere Wärmetauschern für Kraftfahrzeuge, werden die Anforderungen an möglichst geringe Rückstände von Flussmitteln aus einem Lötvorgang immer höher. Jüngere Erkenntnisse legen nahe, dass zum Beispiel umlaufendes Motorkühlmittel geschädigt werden kann, wenn die Konzentrationen von Flussmittelanteilen im Kühlmittel zu hoch werden.

EP 0 781 623 B1 beschreibt ein Verfahren zur Herstellung eines Aluminium-Wärmetauschers, bei dem geschweißte Flachrohre Verwendung finden. Dabei wird das Kühlmittel führende Innere der Flachrohre flussmittelfrei verlötet, wobei eingeformte Sicken mit einer gegenüberliegenden Rohrwand zu Abstützwänden verbunden werden oder auch in das Rohr eingeschobene Innenteile flussmittelfrei verlötet werden. Die Außenwand der Flachrohre wird auf herkömmliche Weise mit Flussmittel belegt, welches aufgrund der vor einer Montage erfolgenden Verschweißung der Rohrwand nicht in das Rohrinnere gelangen kann.

Die EP 0 632 245 A1 offenbart einen Wärmetauscher mit Fluidkanälen, mit einem Blech, zumindest eine im Inneren des Fluidkanals angeordnete Struktur, wobei die Struktur an einer Oberfläche des Blechs anliegt und über eine erste Lötstelle in einem Lötvorgang mit dem Blech verlötet wird. Das Blech wird darüber hinaus über eine zweite Lötstelle unter Einsatz von Flussmittel zu einem Flachrohr verlötet.

Es ist die Aufgabe der Erfindung, ein Verfahren zur Herstellung eines Fluidkanals für einen Wärmetauscher anzugeben, damit der Fluidkanal eine möglichst geringe Belastung eines fluidführenden Raums mit Flussmittel aufweist.

Diese Aufgabe wird für ein eingangs genanntes Verfahren zur Herstellung eines Fluidkanals erfindungsgemäß durch die Merkmale von Anspruch 1 gelöst. Durch den vor dem Lötvorgang offenen Pfad zwischen den Lötstellen kann der Fluidkanal gegenüber dem Stand der Technik deutlich flexibler ausgelegt werden.

Weiterhin vorteilhaft kann z.B. für die Herstellung von Flachrohren auf eine vor dem Lötvorgang vorgesehene Schweißnaht verzichtet werden. Durch die Verlötung des Lötbereichs bzw. Gegenstücks mittels Flussmittel gelangt allenfalls eine geringe Flussmittelmenge in das Innere des Fluidkanals und somit in späteren Kontakt mit dem geführten Fluid. Zugleich erlaubt die flussmittelfreie Verlötung der im Inneren des Fluidkanals angeordneten Struktur einen gewünschten Aufbau des Fluidkanals z.B. mit mechanischen Verstärkungen, Trennwänden und/oder Turbulenz erzeugenden Mitteln.

Unter einem Fluidkanal im Sinne der Erfindung ist jede Fluid führende Struktur auf Aluminiumbasis zu verstehen, insbesondere gefalzte Flachrohre oder fluidführende Kammern bei Wärmetauschern in Stapelscheiben-Bauweise, wie z.B. aus der EP 1 074 807 A2 bekannt.

Die mittels Flussmittel erfolgende Verlötung des Lötbereichs des Blechs bewirkt besonders zweckmäßig einen fluiddichten Abschluss des Fluidkanals, wobei die günstigen und prozesssicheren Eigenschaften einer Verlötung mit Flussmittel besonders vorteilhaft sind. Bei dem Gegenstück kann es sich zum Beispiel um ein weiteres Teilstück des Fluidkanals handeln, zum Beispiel um eine Flachrohrhälfte bei mehrteiligen Flachrohren. Es kann sich auch um einen anderen Abschnitt des Blechs handeln, zum Beispiel bei einteilig gefalteten Flachrohren mit nur einem Schließfalz.

Unter einem Flussmittel im Sinne der Erfindung ist jeder für die Hartverlötung von Aluminium geeignete Zusatzstoff gemeint. Als Flussmittel kommen unter anderem zur Anwendung: Kalium-Aluminium-Fluoride (Handelsname Nocolok) und Gemische von Cäsiumfluorid und/oder Lithiumfluorid und/oder Zinkfluorid mit Kalium-Aluminium-Fluoriden. Weiterhin kommen Kalium-Silizium-Fluoride und Siliziumpulver zur Anwendung, auch als Gemische mit den o.a. Flussmitteln. Bevorzugt hat sich für die Dichtlötung von Falzen bei Aluminium-Falzrohren für Wärmeübertrager die Verwendung von Flussmitteln, die unter dem Handelsnamen NOCOLOK vertrieben werden, als primär verwendete Technologie durchgesetzt. Das Flussmittel wird als Pulver, Suspension, Paste oder dergleichen aufgebracht, schmilzt kurz vor dem Lot, reinigt die Oberflächen, die verlötet werden sollen, und stellt eine metallisch blanke, oxidfreie Aluminiumoberfläche her, die das flüssige Lot benötigt, um benetzen und binden zu können.

Bei einer besonders bevorzugten Ausführungsform der Erfindung ist zumindest während des Lötvorgangs ein kapillarischer Spalt zwischen dem Lötbereich und dem Gegenstück ausgebildet, wobei der kapillarische Spalt eine Berührfläche und einen Spülkanal umfasst. Bevorzugt, aber nicht notwendig ist zudem das Gegenstück ein weiterer Lötbereich des Blechs; zum Beispiel können die Lötbereiche verschiedene Abschnitte derselben Oberfläche sein. Hierdurch kann insgesamt ein Transport von aufgeschmolzenem Flussmittel durch den kapillarischen Spalt und eine Sammlung und/oder Abführung durch den Spülkanal im Zuge des Lötvorgangs erfolgen. Versuche haben gezeigt, dass eine solche Anordnung besonders gut geeignet ist, um auch bei Vorliegen magnesiumhaltiger Aluminium-Legierungen eine Verlötung mit Flussmittel zu ermöglichen. Im Allgemeinen wird nach dem Stand der Technik davon ausgegangen, dass bei magnesiumhaltigen Legierungen ein Magnesiumanteil im Zuge des Aufheizens ausdiffundiert und mit dem Flussmittel für den Lötvorgang schädliche Kristalle bildet, z.B. Magnesiumfluoridkristalle. Eine mögliche, nicht notwendig richtige Erklärung für die überraschend gute Funktion der bevorzugten Ausführungsform wäre ein Wegspülen solcher Kristalle durch das strömende Flussmittel, nämlich aus dem kapillarischen Spalt heraus in den Spülkanal.

Unter einer magnesiumfreien Legierung im Sinne der vorliegenden Erfindung wird dabei ein Magnesiumgehalt von weniger als 0,03 % in der Aluminiumlegierung verstanden. Vorliegend sind sämtliche Prozent-Angaben zu Legierungen als Gewichts-Prozent zu verstehen.

Allgemein vorteilhaft enthält der Kernbereich des Blechs einen Magnesiumgehalt von wenigstens etwa 0,03%, besonders bevorzugt zwischen etwa 0,1 % und etwa 0,3 %. Allgemein bevorzugt beträgt der Magnesiumgehalt des Kernbereichs nicht mehr als etwa 1,0 %. Hierdurch können die mechanischen Eigenschaften verbessert werden. Falls der Kernbereich keine weiteren Beschichtungen, z.B. Schutzplattierungen, aufweist, verbessert oder ermöglicht dieser Magnesiumgehalt zudem die flussmittelfreie Verlötung der Struktur an der Oberfläche des Blechs.

Bei einer bevorzugten Ausführungsform hat das Blech zumindest eine einseitige Lotplattierung, wobei die Lotplattierung besonders bevorzugt, aber nicht notwendig einen Magnesiumgehalt von weniger als etwa 2,5 % aufweist, Diese Obergrenze des Magnesiumgehalts ist für eine flussmittelfreie Verlötung ausreichend und bietet bezüglich einer negativen Beeinflussung der benachbarten flussmittelhaltigen Verlötung durch ausdampfendes Magnesium eine ausreichende Grenze. Bei einer besonders optimierten Ausführungsform beträgt dabei der Magnesiumgehalt der Lotplattierung zwischen etwa 0,03 % und etwa 0,8%.

Bei einer alternativen oder ergänzenden Ausführungsform ist die Struktur als in den Fluidkanal eingesetzter Turbulator aus einer Aluminiumlegierung ausgebildet. Der Turbulator kann zum Beispiel jede bekannte Form einer Innenrippe haben, etwa Wellrippe, Stegrippe oder Ähnliches. Seine flussmittelfreie Verlötung ist besonders zweckmäßig, da das Auftreten vereinzelter Störungen der Verlötung, zum Beispiel bei ungünstigen Abweichungen der Prozessparameter, besser tolerabel ist als etwa bei einer fluiddichten Verlötung des Lötbereichs mit dem Gegenstück. Bei einer besonders vorteilhaften Weiterbildung enthält das Material des Turbulators dabei kein Magnesium (bzw. der Magnesiumgehalt ist < 0,03%), wobei das Blech zur flussmittelfreien Verlötung mit dem Turbulator Magnesium enthält. Hierdurch wird dem Umstand Rechnung getragen, dass Turbulatoren meist eine große Oberfläche aufweisen, durch die unter ungünstigen Umständen selbst bei niedrigen Magnesiumgehalten insgesamt so viel Magnesium ausdampfen könnte, dass die benachbarte flussmittelhaltige Verlötung gestört werden könnte. Bei einer hierzu alternativen Ausführungsform ist es vorgesehen, dass das Material des Turbulators nicht mehr als 0,7 % Magnesium enthält und/oder eine Lotplattierung mit einem Magnesiumgehalt zwischen 0,03% und 0,8% enthält. Versuche haben ergeben, dass auch solche Magnesiumkonzentrationen im Kernmaterial und/oder in einer eventuellen Lotplattierung des Turbulators regelmäßig unschädlich sind.

Bei einer allgemein bevorzugten Ausführungsform der Erfindung ist der Fluidkanal als Flachrohr mit einem in Längsrichtung des Rohres verlaufenden Falz ausgebildet, wobei der Falz als ein Lötbereich des Blechs ausgebildet ist. Unter einem in Längsrichtung des Rohres verlaufenden Falz wird im Sinne der Erfindung jede flächig verlötbare Nahtstelle verstanden. Zum Beispiel kann der Falz auf einer Breitseite des Flachrohres verlaufen oder auf einer Schmalseite. Insbesondere im letzten Fall kann der Falz als Clipsverschluss des Rohres ausgeformt sein. Wenn der Falz auf einer Breitseite verläuft und das Flachrohr mit Stegen versehen ist, dann ist es zweckmäßig, die Lötstellen des Falzes und der benachbarten Stege an gegenüberliegenden Seiten des Flachrohres vorzusehen.

Ganz allgemein bevorzugt hat der flussmittelbenetzt verlötete Falz eines erfindungsgemäßen Flachrohres einen Mindestabstand von 2 mm, besonders bevorzugt von 4 mm, von der nächsten flussmittelfreien Lötstelle, um einen ausreichenden Sicherheitsabstand zu gewährleisten.

In möglicher Ausgestaltung der Erfindung kann die Struktur als zumindest ein aus dem Blech geformter Steg ausgebildet sein, der an der Oberfläche des Blechs anliegt. Bevorzugt, aber nicht notwendig kann durch den Steg ein Mehrkammer-Flachrohr ausgebildet werden. Es versteht sich, dass sowohl Einkammer- als auch Mehrkammer-Flachrohre mit oder ohne eingeschobenen Turbulatoren versehen sein können.

Bei einer bevorzugten Detailgestaltung der Erfindung ist es dabei vorgesehen, dass der Lötbereich des Blechs einen unter Flussmittelbenetzung flächig verlötbaren Falzabschnitt sowie einen daran anschließenden, um mehr als 90 ° umgebogenen Umbug aufweist Der Umbug stellt eine definiert verrundete Kante zur Anlage an einer Oberfläche und/oder zur Ausbildung zum Beispiel eines Spülkanals bereit, der unmittelbar an den Falzabschnitt angrenzt. Je nach verwendeten Materialien kann es dabei besonders bevorzugt vorgesehen sein, dass für eine Länge L des Umbugs und eine Dicke D des Blechs gilt:

$$L > 2 * D;$$

wobei insbesondere für den Fall eines um 180° umgebogenen Umbugs ferner gilt:
L < (B - 2,5 * D), mit einer Breite B des Flachrohrs.

Insgesamt wird hierdurch sichergestellt, dass eine stirnseitige Schnittkante des Blechs bzw. des Umbugs in ausreichendem Mindestabstand von einer flussmittelbenetzten Lötstelle oder einem Flussmittel führenden Bereich (z.B. einem Spülkanal) positioniert ist. Hierdurch ist es zulässig, dass zum Beispiel an der Schnittkante freiliegendes Kernmaterial : des Blechs, das eventuell einen hohen Magnesiumgehalt hat, den Lötprozess nicht durch ausdampfendes und mit dem Flussmittel reagierendes Magnesium stört.

Allgemein vorteilhaft wird das Flussmittel vor dem Lötvorgang flächig und überschüssig auf zumindest einen Teil einer gegenüberliegenden Oberfläche des Blechs aufgebracht. Insbesondere bei geeigneter Formgebung des Blechrandes bzw. des Gegenstücks strömt das Flussmittel dabei nicht oder nur wenig in den Innenbereich des Fluidkanals, in dem eine flussmittelfreie Verlötung stattfindet. Besonders bevorzugt wird das Flussmittel mittels eines Verfahrens aus der Gruppe thermisches Spritzverfahren und Paintflux-Verfahren aufgebracht. Bei thermischen Spritzverfahren wird das Flussmittel mit einer Luftstrom-Pulverförderung in einen hochenergetischen heißen Gasstrom eingebracht. Das Flussmittel schmilzt teilweise oder vollständig auf und wird so auf die Oberfläche appliziert. Bekannt sind unter anderem Plasma-Spritzverfahren, laserinduzierte Spritzverfahren und Heißgas-Spritzverfahren. Unter einem Paintflüx-Verfahren wird insbesondere, aber nicht ausschließlich ein Verfahren gemäß der Druckschrift EP 1 287 941 A1 verstanden.

Die Flussmittelbeladung, unabhängig vom Applikationsverfahren, beträgt vorteilhaft 3 bis 40 g/m$^2$, bevorzugt 5 - 20 g/m$^2$ und besonders bevorzugt 7 - 14g/m$^2$.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.

Fig. 1 zeigt eine erste Ausführungsform eines erfindungsgemäßen Fluidkanals.

Fig. 2 zeigt eine zweite Ausführungsform eines erfindungsgemäßen Fluidkanals.

Fig. 3 zeigt eine dritte Ausführungsform eines erfindungsgemäßen Fluidkanals.

Fig. 4 zeigt eine vierte Ausführungsform eines erfindungsgemäßen Fluidkanals.

Fig. 5 zeigt eine fünfte Ausführungsform eines erfindungsgemäßen Fluidkanals.

Fig. 6 zeigt eine fünfte Ausführungsform eines erfindungsgemäßen Fluidkanals.

Fig. 7 zeigt einen Detailausschnitt eines Falzes einer der Ausführungsformen nach Fig. 1 bis Fig. 6.

Fig. 8 zeigt eine erste Abwandlung des Falzes aus Fig. 7.

Fig. 9 zeigt eine zweite Abwandlung des Falzes aus Fig. 7.

Fig. 10 zeigt eine weitere Ausführungsform eines erfindungsgemäßen Fluidkanals nach Art eines Clipsrohres.

Fig. 11 zeigt eine Abwandlung des Fluidkanals aus Fig. 10 mit einem eingesetzten Turbulator.

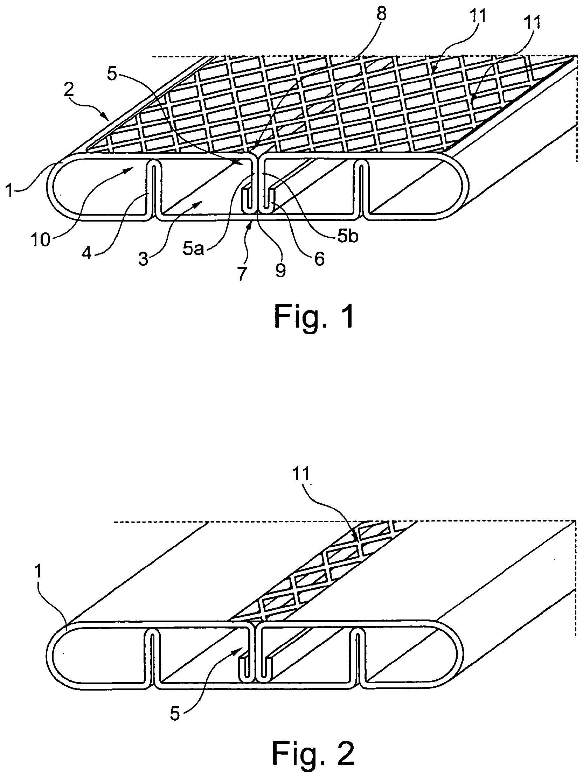

Der in Fig. 1 gezeigte Fluidkanal ist als aus einem einzigen Blech 1 geformtes Flachrohr ausgebildet. Das Blech 1 besteht aus einer AluminiumLegierung, die vorliegend einen Magnesiumgehalt aufweist. Vorliegend, aber nicht allgemein notwendig, kann zumindest auf der äußeren Oberfläche 2 eine Lotplattierung auf einem Kernbereich des Blechs aufgebracht sein. Für das vorliegende und sämtliche weitere Ausführungsbeispiele sind für den Kernbereich, der im Fall des Fehlens von Lotplattierungen dem gesamten Blech entspricht, und für die Lotplattierungen folgende Legierungen bevorzugt (alle Angaben in Gewichts-%):

Kernbereich / Grundwerkstoff des Bleches:

|  | minimal | bevorzugt | maximal |
|---|---|---|---|
| Al | Rest | Rest | Rest |
| Si | 0 | - | 1,2 |
| Fe | 0 | 0 - 0,4 | 0,7 |
| Cu | 0,1 | 0,3 - 0,8 | 1,2 |
| Mn | 0 | - | 2,0 |
| Mg | 0,03 | 0,1 - 0,3 | 1,0 |
| Cr | 0 | 0 -0,2 | 0,5 |
| Zn | 0 | - | 2,5 |
| Ti | 0 | 0 - 0,10 | 0,3 |
| Sn | 0 | - | 0,05 |
| Zr | 0 | - | 0,2 |
| Bi | 0 | - | 0,05 |
| Sr | 0 | - | 0,05 |

Lotplattierung:

|  | min. | bevorzugt | max. |
|---|---|---|---|
| Al | Rest | Rest | Rest |
| Si | 5 bis 6 | 7 - 11 | 20 |
| Fe | 0 | 0 - 0,2 | 0,8 |
| Cu | 0 | 0 - 0,3 | 1 |
| Mn | 0 | - | 0,15 |
| Mg | 0 | 0,03 - 0,8 | 2,5 |
| Cr | 0 | - | 0,05 |
| Zn | 0 | 0 - 2,0 | 4 |
| Ti | 0 | 0 - 0,10 | 0,2 |
| Sn | 0 | - | 0,05 |
| Zr | 0 | - | 0,05 |
| Bi | 0 | 0 - 0,20 | 0,5 |
| Sr | 0 | 0 - 0,05 | 0,2 |

Das Flachrohr ist vorliegend als Mehrkammer-Flachrohr mit zwei gefalteten Stegen 4 und einem Falz 5 zum Verschließen des Rohres entlang einer Längsrichtung ausgebildet.

Der Falz 5 ist vorliegend an einer Breitseite des Flachrohres angeordnet. Sie umfasst einen ersten Falzabschnitt 5a und einen zweiten Falzabschnitt 5b, die jeweils durch Umbiegung von gegenüberliegenden Randbereichen des Blechs 1 um 90° gebildet werden. An die Falzabschnitte 5a, 5b schließt sich jeweils ein Umbug 6 um 180° an. Die Falzabschnitte 5a, 5b liegen im Bereich der Umbuge 6 an einem Anlagebereich 7 der inneren Blechoberfläche 3 bzw. Innenseite des Flachrohrs an. Neben dem Anlagebereich 7 bildet jeder der Falzabschnitte 5a, 5b einen Lötbereich bzw. ein Gegenstück im Sinne der Erfindung aus.

Die über eine Berührfläche aneinander anliegenden Falzabschnitte 5a, 5b bilden zwischen sich einen kapillarischen Spalt 8 aus. Zwischen dem Lötbereich 7 und den Umbügen 6 ist ein Spülkanal 9 an dem Falz ausgeformt, in den der kapillarische Spalt 8 einmündet und der einen größeren Durchmesser als der kapillarische Spalt 8 hat.

Die Stege 4 haben eine Höhe, die dem innendurchmesser des Flachrohres entspricht und liegen an der innenseitigen Oberfläche 3 des Blechs 1 in einem Anlagebereich 10 an. Der Anlagebereich 10 befindet sich an der dem Lötbereich 7 gegenüberliegenden Flachrohrseite, so dass ein besonders großer Abstand zwischen dem Anlagebereich 10 und dem Anlagereich 7 besteht.

Die Stege 4 bilden eine im Inneren des Fluidkanals angeordnete Struktur im Sinne der Erfindung aus, die an der inneren Oberfläche 3 des Blechs im Anlagebereich 10 anliegt, um dort eine erste, flussmitteifreie Lötstelle auszubilden.

Der Falz 5 bildet mit seinen Falzabschnitten 5a, 6a sowie dem Anlagebereich 7 eine zweite Lötstelle aus, die in einem Lötvorgang mit Flussmittel benetzt wird. Hierzu ist im ersten Ausführungsbeispiel die gesamte äußere Breitseite des Flachrohrs auf der Seite des Falzes 5 mit Flussmittel 11 versehen. Bei dem Flussmittel 11 handelt es sich um NOCOLOK (Handelsname), das mittels eines Paintflux-Verfahrens aufgetragen wurde.

Durch den vor der Verlötung offenen Falz besteht ein offener Pfad zwischen den beiden Lötstellen. Insbesondere besteht geometrisch die Möglichkeit, dass geschmolzenes Flussmittel von der zweiten Lötstelle unmittelbar zu der ersten Lötstelle fließen kann, was tatsächlich aber erfindungsgemäß verhindert wird.

Auf der Außenseite kann eine Rippe oder andere Struktur eines insgesamt einen Wärmetauscher bildenden Stapels von Bauteilen aufgesetzt sein (nicht dargestellt). Die so vormontierte Struktur wird in einen Lötofen verbracht und aufgeheizt. Dabei werden sowohl die erste, flussmittelfreie Lötstelle als auch die zweite, flussmittelbenetzte Lötstelle simultan in demselben Lötvorgang verlötet.

Bei einer entsprechenden Temperatur verflüssigt sich zunächst das außen applizierte Flussmittel und strömt in den kapillarischen Spalt 8. Im vorliegenden Beispiel ist das Flussmittel überschüssig vorhanden. Nach kapillarisch getriebener Durchströmung des Spaltes 8 sammelt es sich in dem Spülkanal 9. Je nach Detailgestaltung kann ergänzend, aber nicht notwendig noch eine Abführung aus dem Spülkanal über stirnseitige Ausformungen des Flachrohres vorgesehen sein (nicht dargestellt).

Aufgrund des trennend wirkenden Spülkanals erfolgt vorliegend keine Benetzung der flussmittelfreien ersten Lötstelle 4, 10. Dort erfolgt aufgrund der gewählten Materialien eine flussmittelfreie Verlötung, so dass der Steg 4 als Struktur an der gegenüberliegenden Blechoberfläche verlötet wird. Hierdurch wird eine mechanische Festigung des Fluidkanals erzielt und mehrere getrennte Kammern werden ausgebildet.

Das Ausführungsbeispiel nach Fig. 2 bis Fig. 4 unterscheidet sich von dem ersten Beispiel nur dadurch, dass der außenseitige Auftrag von Flussmittel nicht vollflächig erfolgt.

Bei dem Beispiel nach Fig. 2 erfolgt nur ein selektives Aufbringen nur partiell in einem breiten Streifen über dem Bereich des Falzes 5.

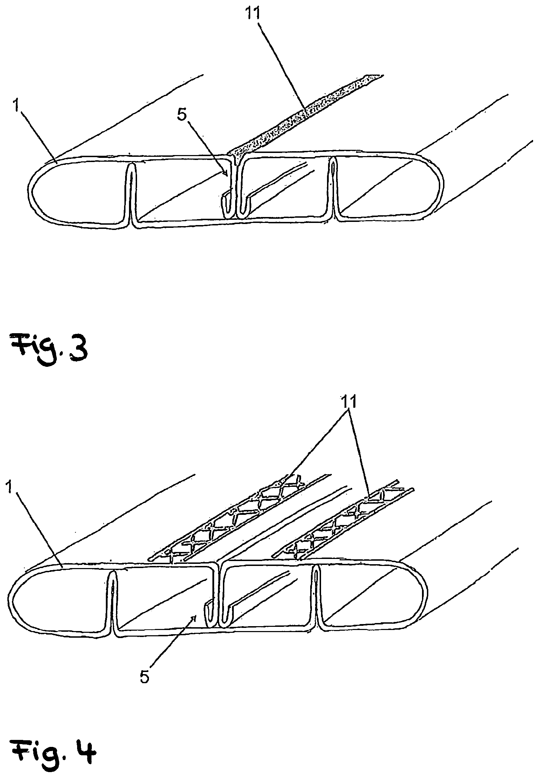

Bei dem Beispiel nach Fig. 3 erfolgt der Auftrag nur als Strich unmittelbar in der Falzkapillare, wobei der Ansatz der Kapillare verfüllt ist.

Bei dem Beispiel nach Fig. 4 erfolgt der Auftrag in zwei schmalen Streifen jeweils seitlich des Falzes 5. Nach Verflüssigung des gut benetzenden Flussmittels fließt dieses auch in den kapillarischen Spalt ein.

Bei jedem der Beispiele Fig. 1 bis Fig. 4 ist das Flussmittel im Überschuss aufgetragen.

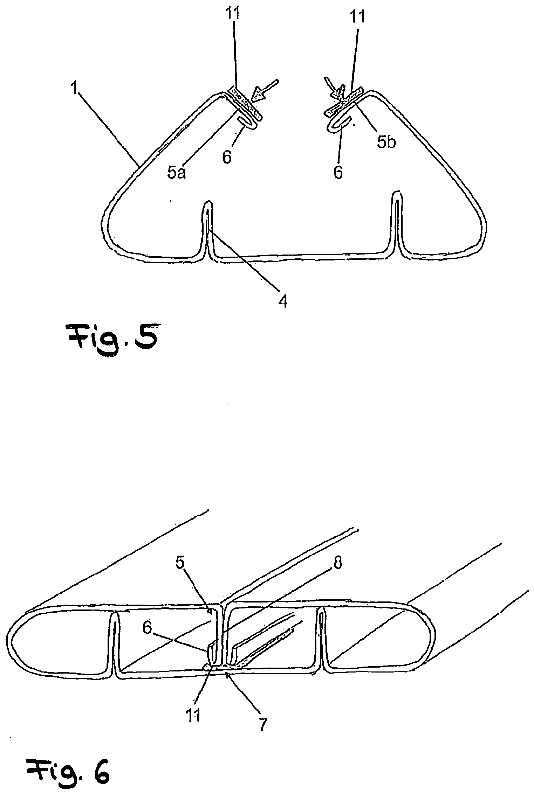

Das Beispiel nach Fig. 5 zeigt einen Auftrag unmittelbar auf die Falzabschnitte 5a, 5b, wobei der Auftrag während der Rohrfaltung bzw. vor einem vollständigen Zufalten des Rohres erfolgt.

Fig. 6 zeigt ein Beispiel, bei dem das Flussmittel vor einer Zufaltung des Rohres auf dem Lötbereich 7, an dem die Umbuge 6 anliegen, aufgebracht wurde. Bei diesem Beispiel wird zumindest ein Teil des aufgebrachten Lots nicht zuverlässig von dem Spülkanal aufgenommen und kann im Prinzip zur Seite zu den flussmittelfrei zu verlötenden Stegen fließen. Zur Vermeidung einer solchen ungewünschten Benetzung ist im Beispiel nach Fig. 6 die applizierte Flussmittelmenge nicht überschüssig, sondern definiert bemaßt. Eine solche definierte Bemaßung bietet sich als mögliche Verbesserung auch für das Beispiel nach Fig. 5 an.

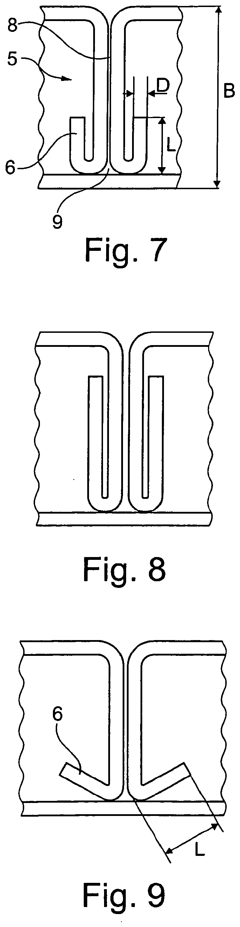

Fig. 7 bis Fig. 9 zeigen verschiedene Varianten der Umbuge 6, die mit jedem der vorstehenden Beispiele kombinierbar sind. Insbesondere, wenn ein Kernbereich des Blechs viel Magnesium enthält und mit Lot plattiert ist, das ebenfalls Magnesium enthält, kann die offene Stirnseite der Blechkante eine beim Aufheizen große Menge an Magnesium freisetzen. Das austretende Magnesium könnte zu einem nicht tolerierbaren Flussmittelverbrauch unter Bildung von Magnesiumfluorid in der Lötnaht führen.

Bevorzugt gilt daher folgender Zusammenhang für eine Blechdicke D, eine Länge des Umbugs L und eine Rohrbreite B:

$$L > 2 * D.$$

Der Umbug kann dabei um jeden Winkel von deutlich über 90° (siehe etwa Fig. 9) umgebogen sein, insbesondere um 180° (siehe Fig. 7, Fig. 8).

Falls der Umbug 180° beträgt, ist nach Möglichkeit auch folgende Relation zu beachten, um eine zu große Nähe der Stirnkante und der gegenüberliegenden Blechseite zu vermeiden (siehe Fig. 8):

$$L < B - 2{,}5 * D.$$

Allgemein ist zweckmäßig zu beachten, dass die Stirnkanten der Umbuge 6 auch nicht die Wände der Falzabschnitte 5a, 6a berühren. Bevorzugt ist hier ein Sicherheitsabstand von wenigstens etwa der Blechdicke D einzuhalten. Vorteilhaft ist es, wenn der Abstand zwischen einem mit Flussmittel versehenen Bereich (befluxt) und einem nicht mit Flussmittel versehenen Bereich (nicht befluxt), die jeweils auch verlötet werden, etwa 2 bis 4 mm, bzw. 3 bis 5 beträgt.

Auch ist es vorteilhaft, wenn der Steg 4 oder die Stege 4 auf der gegenüberliegenden Innenseite der Rohrwand anliegen.

Insgesamt wird so besonders effektiv verhindert, dass Magnesium hin zu unerwünschten Bereichen ausdampft bzw. diffundiert oder Flussmittel in den Bereich der Stirnkanten der Umbuge 6 fließt.

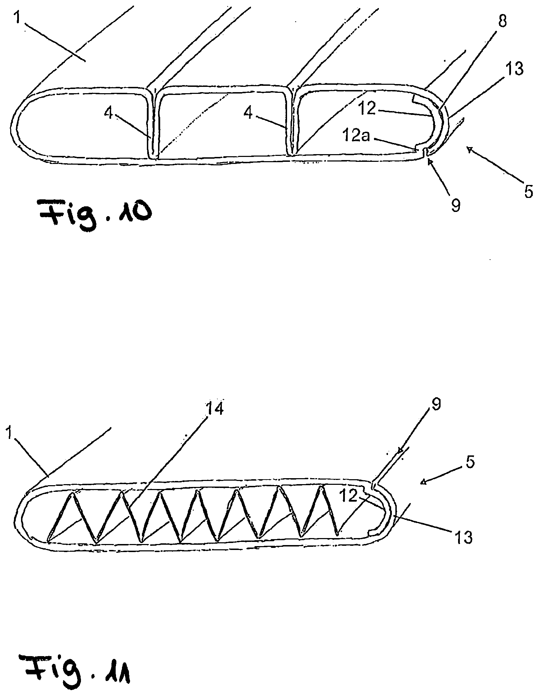

Bei dem Beispiel nach Fig. 10 ist der Falz nicht wie in den vorhergehenden Beispielen an der Breitseite des Flachrohres, sondern an der Schmalseite vorgesehen. Zwei gegenüberliegende Ränder des Blechs 1 haben eine jeweils teilkreisförmige Umbiegung 12, 13, so dass sie im geschlossenen Zustand formschlüssig ineinander greifen. Auf diese Weise ist das Flachrohr als Clipsrohr ausgeformt. Die Außenfläche der innenliegenden Umbiegung 12 und die Innenfläche der außenliegenden Umbiegung 13 liegen gegeneinander an, so dass zwischen ihnen ein kapillarischer Spalt 8 ausgebildet ist. Ein analog den vorhergehenden Beispielen wirkender Spülkanal ist durch eine Lücke zwischen dem Ende der außenliegenden Umbiegung 13 und einer Abstufung 12a der innenliegenden Umbiegung 12 ausgebildet.

Die Applikation von Flussmittel kann in zu den vorhergehenden Beispielen analoger Weise auf der Außenfläche des Rohres oder gezielt auf einer oder beider der miteinander verlötenden Flächen der Umbiegungen 12, 13 erfolgen.

Das Flachrohr hat analog zu den vorhergehenden Beispielen mindestens zwei flussmittelfrei verlötende Stege 4 in seinem inneren, so dass es der Bauart nach ein Mehrkammer-Flachrohr ist.

Fig. 11 zeigt ein weiteres Beispiel, bei dem der Falz 5 wie in Fig. 10 ausgebildet ist. In Abweichung zu Fig. 10 ist in das Rohr eine Struktur in Form eines Turbulators 14 eingeschoben, der flussmittelfrei mit der innenseitigen Oberfläche des Blechs 1 verlötet. Der Turbulator 14 ist vorliegend als Wellrippe ausgeformt. Es versteht sich, dass Turbulatoren je nach Anforderungen auch in Mehrkammer-Flachrohre wie in Fig. 10 eingeschoben sein können.

Folgende Legierungen werden für einen Turbulator bevorzugt:

|     | min. | bevorzugt | max. |
| --- | --- | --- | --- |
| Al | Rest | Rest | Rest |
| Si | 0 | 0,2 - 0,6 | 1,2 |
| Fe | 0 | 0 - 0,4 | 0,7 |
| Cu | 0 | - | 0,7 |
| Mn | 0 | - | 2,0 |
| Mg | 0 | 0 - 0,7 | 3,0 |
| Cr | 0 | 0 - 0,2 | 0,5 |
| Zn | 0 | - | 3,5 |
| Ti | 0 | - | 0,3 |
| Sn | 0 | - | 0,2 |
| Zr | 0 | - | 0,2 |
| Bi | 0 | - | 0,05 |
| Sr | 0 | - | 0,05 |

In ganz bevorzugter Ausgestaltung ist der Turbulator magnesiumfrei (< 0,03% Magnesiumgehalt). Hierdurch wird eine aufgrund der oft großen Oberfläche von Turbulatoren unerwünscht große Ausdampfung von Magnesium vermieden. Das für die flussmittelfreie Verlötung gewünschte Magnesium wird bei solcher Ausgestaltung vollständig von dem Blechmaterial und/oder einer Lotplattierung des Bleches bereitgestellt. Grundsätzlich kann auch der Turbulator eine Lotplattierung aufweisen.

Allgemein gilt: Die Kombination aus flussmittelfreier Stegverlötung auf der Rohrinnenseite bzw. flussmittelfreier Verlötung des Innenturbulators mit der Rohrinnenseite und flussmittelhaltiger Falzverlötung erfordert geeignete Materialien für Rohrgrundwerkstoff und Lotplattierung bzw. im Falle eines Innenturbulators für Turbulator-Grundwerkstoff und Turbulator-Lotplattierung.

Folgende Varianten aus plattierten und unplattierten Fügepartnern sind bevorzugt:

- Rohrblech innen und außen lotplattiert, nur Stege und Falz, kein Turbulator;
- Rohrblech innen und außen lotplattiert, nur Falz, keine Stege, blanker Turbulator;
- Rohrblech nur außen lotplattiert und Turbulator beidseitig lotplattiert.

Folgende Werkstoffkonzepte für die flussmittelfreie Innenverlötung sind bevorzugt:

- Werkstoffkonzepte im normalen 3-Schichtaufbau (bestehend aus Lot/Rohrgrundwerkstoff/Lot und/oder Lot/Turbulatorwerkstoff/Lot), die gewisse Mindestanteile an Magnesium enthalten. Darüber hinaus stellt die Verwendung von magnesiumhaltigen Legierungen für das Rohr und den eingeschobenen Turbulator eine Möglichkeit dar, die Festigkeitseigenschaften der verwendeten Aluminiumwerkstoffe zu verbessern.

- Multilayer-Konzepte auch als mehrlagige Konzepte bekannt, mit einem 4- oder 5-Schichtaufbau (bestehend aus Lot / Rohrwerkstoff / Lot / Deckschicht oder Deckschicht / Lot / Rohrwerkstoff / Lot / Deckschicht und analog für den Turbulator), die auf Grund der ablaufenden Mechanismen beim flussmittelfreien Löten nur geringe Anteile an Magnesium nur im Lot enthalten müssen (< 0,10%). Der Rohrgrundwerkstoff kann auch geringe Anteile an Magnesium enthalten, kann aber auch komplett Mg-frei (< 0,03%) gewählt werden.

Es versteht sich, dass die einzelnen Merkmale der verschiedenen Ausführungsbeispiele je nach Anforderungen miteinander kombinierbar sind, innerhalb des Schutzumfangs der beiliegenden Ansprüche.

**Patentansprüche**

1. Verfahren zur Herstellung eines Fluidkanals für einen Wärmetauscher, umfassend
   ein Blech (1), wobei das Blech (1) zumindest einen Kernbereich aus einer Aluminium-Basislegierung aufweist,
   zumindest eine im Inneren des Fluidkanals angeordnete Struktur (4, 14), wobei die Struktur (4, 14) an einer Oberfläche (3) des Blechs anliegt und über eine erste Lötstelle in einem Lötvorgang mit dem Blech verlötet wird, und
   wobei ein Lötbereich (5a, 5b, 7, 12, 13) des Blechs und ein Gegenstück (5a, 5b, 7, 12, 13) aneinander anliegen und in demselben Lötvorgang als eine zweite Lötstelle unter Benetzung durch Flussmittel miteinander verlötet werden,
   wobei vor dem Lötvorgang ein offener Pfad zwischen den beiden Lötstellen besteht, **dadurch gekennzeichnet, dass** die erste Lötstelle flussmittelfrei verlötet wird.

2. Verfahren nach Anspruch 1, **dadurch gekennzeichnet, dass** während des Lötvorgangs ein kapillarischer Spalt (8) zwischen dem Lötbereich (5a, 5b, 7, 12, 13) und dem Gegenstück (5a, 5b, 7, 12, 13) ausgebildet ist, wobei der kapillarische Spalt (8) eine Berührfläche (5a, 5b, 12, 13) und einen Spülkanal (9) umfasst, und wobei insbesondere das Gegenstück (5a, 5b, 7, 12, 13) ein weiterer Lötbereich des Blechs ist.

3. Verfahren nach Anspruch 1 oder 2, **dadurch gekennzeichnet, dass** der Kernbereich des Blechs (1) einen Magnesiumgehalt von wenigstens etwa 0,03%, insbesondere zwischen etwa 0,1% und etwa 1,0%, aufweist.

4. Verfahren nach einem der vorhergehenden Ansprüche, **dadurch gekennzeichnet, dass** das Blech (1) zumindest eine einseitige Lotplattierung aufweist, wobei insbesondere die Lotplattierung einen Magnesiumgehalt von weniger als etwa 2,5% aufweist.

5. Verfahren nach Anspruch 4, **dadurch gekennzeichnet, dass** der Magnesiumgehalt der Lotplattierung zwischen etwa 0,03% und etwa 0,8% beträgt.

6. Verfahren nach einem der vorhergehenden Ansprüche, **dadurch gekennzeichnet, dass** die Struktur als in den Fluidkanal eingesetzter Turbulator (14) aus einer Aluminiumlegierung ausgebildet ist.

7. Verfahren nach Anspruch 6, **dadurch gekennzeichnet, dass** das Material des Turbulators (14) kein Magnesium enthält, wobei das Blech (1) zur flussmittelfreien Verlötung mit dem Turbulator (14) Magnesium enthält.

8. Verfahren nach Anspruch 6, **dadurch gekennzeichnet, dass** das Material des Turbulators (14) nicht mehr als 0,7% Magnesium enthält und/oder eine Lotplattierung mit einem Magnesiumgehalt zwischen 0,03% und 0,8% enthält.

9. Verfahren nach einem der vorhergehenden Ansprüche, **dadurch gekennzeichnet, dass** der Fluidkanal als Flachrohr mit einem in Längsrichtung des Rohres verlaufenden Falz (5) ausgebildet ist, wobei der Falz (5) als ein Lötbereich des Blechs (1) ausgebildet ist.

10. Verfahren nach Anspruch 9, **dadurch gekennzeichnet, dass** die Struktur als zumindest ein aus dem Blech geformter Steg (4) ausgebildet ist, der an der Oberfläche (3) des Blechs (1) anliegt, insbesondere zur Ausbildung eines Mehrkammer-Flachrohres.

11. Verfahren nach einem der Ansprüche 9 oder 10, **dadurch gekennzeichnet, dass** der Lötbereich des Blechs (1) einen unter Flussmittelbenetzung flächig verlötbaren Falzabschnitt (5a, 5b) sowie einen daran anschließenden, um mehr als 90° umgebogenen Umbug (6) aufweist.

12. Verfahren nach Anspruch 11, **dadurch gekennzeichnet, dass** für eine Länge L des Umbugs (6) und eine Dicke D des Blechs (1) gilt:

$$L > 2 * D;$$

wobei insbesondere für den Fall eines um 180° umgebogenen Umbugs (6) ferner gilt:
L < (B - 2,5 * D), mit einer Breite B des Flachrohrs.

13. Verfahren nach einem der vorhergehenden Ansprüche, **dadurch gekennzeichnet, dass** das Flussmittel vor dem Lötvorgang flächig und überschüssig auf zumindest einen Teil einer gegenüberliegenden Oberfläche (2) des Blechs (1) aufgebracht wird.

14. Verfahren nach einem der vorhergehenden Ansprüche, **dadurch gekennzeichnet, dass** das Flussmittel mittels eines Verfahrens aus der Gruppe thermisches Spritzverfahren und Paintflux-Verfahren aufgebracht wird.

**Claims**

1. A method for producing a fluid channel for a heat exchanger, comprising
   a metal sheet (1), wherein the metal sheet (1) has at least one core region made of an aluminium base alloy,
   at least one structure (4, 14) arranged in the interior of the fluid channel, wherein the structure (4, 14) lies against a surface (3) of the metal sheet and is soldered to the metal sheet by way of a first solder joint in a soldering operation, and
   wherein a soldering region (5a, 5b, 7, 12, 13) of the metal sheet and a counterpart (5a, 5b, 7, 12, 13) lie against one another and are soldered to one another in the same soldering operation as a second solder joint with wetting by flux,
   wherein there is an open path between the two solder joints before the soldering operation, **characterised in that** the first solder joint is soldered without flux.

2. The method as claimed in claim 1, **characterised in that** a capillary gap (8) is formed between the soldering region (5a, 5b, 7, 12, 13) and the counterpart (5a, 5b, 7, 12, 13) during the soldering operation, wherein the capillary gap (8) comprises a contact surface (5a, 5b, 12, 13) and a flushing channel (9), and wherein in particular the counterpart (5a, 5b, 7, 12, 13) is a further soldering region of the metal sheet.

3. The method as claimed in claim 1 or 2, **characterised in that** the core region of the metal sheet (1) has a magnesium content of at least approximately 0.03%, in particular between approximately 0.1% and approximately 1.0%.

4. The method as claimed in one of the preceding claims, **characterised in that** the metal sheet (1) has at least one unilateral solder plating, wherein in particular the solder plating has a magnesium content of less than approximately 2.5%.

5. The method as claimed in claim 4, **characterised in that** the magnesium content of the solder plating is between approximately 0.03% and approximately 0.8%.

6. The method as claimed in one of the preceding claims, **characterised in that** the structure is in the form of a turbulator (14) made of an aluminium alloy which is inserted into the fluid channel.

7. The method as claimed in claim 6, **characterised in that** the material of the turbulator (14) does not contain any magnesium, wherein the metal sheet (1) contains magnesium for soldering to the turbulator (14) without flux.

8. The method as claimed in claim 6, **characterised in that** the material of the turbulator (14) contains no more than 0.7% magnesium and/or contains a solder plating having a magnesium content of between 0.03% and 0.8%.

9. The method as claimed in one of the preceding claims, **characterised in that** the fluid channel is in the form of a flat tube having a fold (5) which runs in the longitudinal direction of the tube, wherein the fold (5) is in the form of a soldering region of the metal sheet (1).

10. The method as claimed in claim 9, **characterised in that** the structure is in the form of at least one web (4) which is formed from the metal sheet and lies against the surface (3) of the metal sheet (1), in particular for forming a multi-chamber flat tube.

11. The method as claimed in either of claims 9 or 10, **characterised in that** the soldering region of the metal sheet (1) has a fold portion (5a, 5b) which can be soldered areally with wetting by flux and also an adjoining edgefold (6) bent through more than 90°.

12. The method as claimed in claim 11, **characterised in that** the following applies for a length L of the edgefold (6) and a thickness D of the metal sheet (1) :

$$L > 2 * D;$$

wherein, particularly for the case of an edgefold (6) bent through 180°, the following further applies: L < (B - 2.5 * D), with a width B of the flat tube.

**13.** The method as claimed in one of the preceding claims, **characterised in that** the flux is applied areally and in excess to at least part of an opposing surface (2) of the metal sheet (1) before the soldering operation.

**14.** The method as claimed in one of the preceding claims, **characterised in that** the flux is applied by means of a method from the group consisting of a thermal spraying method and paintflux method.

## Revendications

**1.** Procédé de fabrication d'un conduit de fluide pour un échangeur de chaleur, comprenant :

une tôle (1), où la tôle (1) présente au moins une zone centrale se composant d'un alliage à base d'aluminium,
au moins une structure (4, 14) disposée à l'intérieur du conduit de fluide, où la structure (4, 14) est en appui sur une surface (3) de la tôle et, par un premier point de brasage réalisé au cours d'un processus de brasage, est brasée avec la tôle, et où une zone de brasage (5a, 5b, 7, 12, 13) de la tôle et une pièce formant pendant (5a, 5b, 7, 12, 13) sont en appui l'une contre l'autre et, au cours du même processus de brasage, sont brasées l'une avec l'autre, comme un deuxième point de brasage, en mouillant avec un flux,
où, avant le processus de brasage, il subsiste un passage ouvert entre les deux points de brasage,
**caractérisé en ce que** le premier point de brasage est brasé sans flux.

**2.** Procédé selon la revendication 1, **caractérisé en ce qu'**un interstice capillaire (8) est formé, au cours du processus de brasage, entre la zone de brasage (5a, 5b, 7, 12, 13) et la pièce formant pendant (5a, 5b, 7, 12, 13), où l'interstice capillaire (8) comprend une surface de contact (5a, 5b, 12, 13) et un conduit de rinçage (9), et où en particulier la pièce formant pendant (5a, 5b, 7, 12, 13) est une autre zone de brasage de la tôle.

**3.** Procédé selon la revendication 1 ou 2, **caractérisé en ce que** la zone centrale de la tôle (1) présente une teneur en magnésium au moins de 0,03 % environ, en particulier comprise entre 0,1 % environ et 1,0 % environ.

**4.** Procédé selon l'une quelconque des revendications précédentes, **caractérisé en ce que** la tôle (1) présente au moins un placage par brasure effectué sur un côté, où le placage par brasure présente en particulier une teneur en magnésium de moins de 2,5 % environ.

**5.** Procédé selon la revendication 4, **caractérisé en ce que** la teneur en magnésium du placage par brasure est comprise entre 0,03 % environ et 0,8 % environ.

**6.** Procédé selon l'une quelconque des revendications précédentes, **caractérisé en ce que** la structure est configurée comme un turbulateur (14) introduit dans le conduit de fluide et se composant d'un alliage d'aluminium.

**7.** Procédé selon la revendication 6, **caractérisé en ce que** le matériau du turbulateur (14) ne contient pas de magnésium, où la tôle (1) servant au brasage, sans flux, avec le turbulateur (14) contient du magnésium.

**8.** Procédé selon la revendication 6, **caractérisé en ce que** le matériau du turbulateur (14) ne contient pas plus de 0,7 % de magnésium et / ou un placage par brasure est réalisé en ayant une teneur en magnésium comprise entre 0,03 % et 0,8 %.

**9.** Procédé selon l'une quelconque des revendications précédentes, **caractérisé en ce que** le conduit de fluide est configuré comme un tube plat ayant un pli (5) s'étendant dans le sens de la longueur du tube, où le pli (5) est configuré comme une zone de brasage de la tôle (1).

**10.** Procédé selon la revendication 9, **caractérisé en ce que** la structure est configurée comme au moins une paroi (4) formée à partir de la tôle, laquelle paroi vient en appui sur la surface (3) de la tôle (1), en particulier pour la formation d'un tube plat à chambres multiples.

**11.** Procédé selon l'une des revendications 9 ou 10, **caractérisé en ce que** la zone de brasage de la tôle (1) présente une partie (5a, 5b) formant des plis et pouvant être brasée sur une surface à plat en mouillant avec un flux, ladite zone de brasage présentant un repli (6) recourbé de plus de 90° qui fait suite à ladite partie formant des plis.

**12.** Procédé selon la revendication 11, **caractérisé en ce que** la relation qui suit s'applique pour une longueur L du repli (6) et pour une épaisseur D de la tôle (1) :

$$L > 2* D \; ;$$

où la relation qui suit s'applique en outre, en particulier, dans le cas d'un repli (6) recourbé de 180° :

L < (B - 2,5 * D), avec une largeur B du tube plat.

13. Procédé selon l'une quelconque des revendications précédentes, **caractérisé en ce que** le flux est appliqué à plat et de façon excédentaire sur au moins une partie d'une surface opposée (2) de la tôle (1).

14. Procédé selon l'une quelconque des revendications précédentes, **caractérisé en ce que** le flux est appliqué grâce à un procédé utilisé parmi ceux du groupe comprenant le procédé de pulvérisation à chaud et le procédé d'application d'un produit de type *Paintflux.*

Fig. 1

Fig. 2

11

1

5

Fig. 3

11

1

5

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0781623 B1
- EP 0632245 A1
- EP 1074807 A2
- EP 1287941 A1